# EUROPÄISCHE PATENTSCHRIFT

(11) **EP 3 526 577 B1**
(45) Veröffentlichungstag und Bekanntmachung des Hinweises auf die Patenterteilung: **12.08.2020**
(21) Anmeldenummer: 17784202.8
(22) Anmeldetag: 27.09.2017
(51) Int. Cl.: G01M 15/10

(54) **GASZUFÜHREINHEIT FÜR EINE ABGASANALYSEEINHEIT ZUR MESSUNG VON ABGASEN VON VERBRENNUNGSKRAFTMASCHINEN**
GAS FEED UNIT FOR AN EXHAUST-GAS ANALYSIS UNIT FOR THE MEASUREMENT OF EXHAUST GASES OF INTERNAL COMBUSTION ENGINES
UNITÉ D'INTRODUCTION DE GAZ POUR UNE UNITÉ D'ANALYSE DE GAZ D'ÉCHAPPEMENT DESTINÉE À LA MESURE DES GAZ D'ÉCHAPPEMENT DE MOTEURS À COMBUSTION

(30) Priorität: 17.10.2016 DE 102016119713
(43) Veröffentlichungstag der Anmeldung: 21.08.2019
(73) Patentinhaber: AVL Emission Test Systems GmbH, 41460 Neuss (DE)
(72) Erfinder: DICKOW, Achim, 42555 Velbert (DE)
(74) Vertreter: terpatent Patentanwälte ter Smitten Eberlein-Van Hoof Rütten Daubert
(86) Internationale Anmeldenummer: PCT/EP2017/074500
(87) Internationale Veröffentlichungsnummer: WO 2018/072977

(56) Entgegenhaltungen:
- DE-A1- 4 317 867

## Beschreibung

Die Erfindung betrifft eine Gaszuführeinheit für eine Abgasanalyseeinheit zur Messung von Abgasen von Verbrennungskraftmaschinen mit einem Messgerät zur Analyse von Probengas, einer Kalibriergasleitung, einer Spülgasleitung und einer Probengasleitung, die in eine gemeinsame Verbindungsleitung münden, über die eine fluidische Verbindung zum Messgerät herstellbar ist, Absperrventilen in der Kalibriergasleitung, der Spülgasleitung und der Probengasleitung, über welche der Probengasstrom, der Kalibriergasstrom und der Spülgasstrom wahlweise absperrbar oder freigebbar sind und einer Pumpe zur Förderung des Probengasstroms aus einer Abgasquelle.

Abgasanalyseeinheiten werden beispielsweise an Rollenprüfständen von Kraftfahrzeugen verwendet. Die dabei verwendeten Analyseschränke beinhalten einerseits die Ansteuerung und Elektronik der in der Abgasmessanlage, welche beispielsweise als CVS-Anlage (constant volume sample) ausgeführt sein kann aber auch zur Analyse unverdünnten Abgases dienen kann, und andererseits die zur Analyse des Abgases notwendigen Messgeräte zur Bestimmung der Schadstoffmengen im Abgas, wie beispielsweise Flammenionisationsdetektoranalysegeräte zur Bestimmung von Kohlenwasserstoffen oder über einen Gaschromatographen zur Bestimmung von Methanmengen, Chemilumineszenzdetektoranalysegeräte zur Bestimmung von Stickoxidmengen im Abgas, Infrarotdetektoranalysegeräte zur Bestimmung verschiedener aktiver Komponenten wie Kohlenmonoxid, Kohlendioxid oder Kohlenwasserstoffverbindungen im Abgas. Entsprechend ist der Schaltschrank über Leitungen, welche über entsprechende Kupplungen an den Schaltschrank angeschlossen werden, mit den Probenahmesonden der Abgasentnahmeanlage verbunden.

Die Messgeräte werden über Gaszuführeinheiten versorgt, mittels derer ihnen entweder zu analysierendes Probengas, Kalibriergas oder Spülgas zugeführt wird.

Die Durchflussraten in diesen Gaszuführeinheiten betragen üblicherweise etwa 10 bis 12 l/min. Bei modernen Verbrennungsmotoren wird jedoch der Anteil an Abgasen durch eine bessere und sauberere Verbrennung stetig verringert. Hinzu kommt, dass nicht nur die Zusammensetzung des tatsächlich ausgestoßenen Abgases gemessen wird, sondern beispielsweise auch die Zusammensetzung des über eine Abgasrückführleitung zurückgeführten Abgases analysiert werden soll. Gerade dieses zurückgeführte Abgas hat jedoch immer auch einen Einfluss auf die folgenden Verbrennungsvorgänge, so dass die Entnahme lediglich in sehr geringen Durchflussraten stattfinden kann, da ansonsten die Rückwirkung auf den Motor so hoch wäre, dass die Verbrennungsdaten nicht mehr denen des Normalbetriebes entsprächen. Sollen nun gleichzeitig mit geringer Verzögerung von beispielswiese etwa 1 Sekunde Informationen bezüglich der Zusammensetzung dieses Abgases vorliegen, müsste mit einer extrem starken Verdünnung gearbeitet werden, um ausreichende Durchflussraten für die Analyseeinheit zu erzielen. Dies führt jedoch zu sehr ungenauen Messwerten, da die Grenzen der Messgenauigkeit der vorhandenen Messgeräte bei derart starken Verdünnungen erreicht werden. Daraus folgt auch, dass Verfälschungen der Messergebnisse bei Verunreinigungen durch zuvor in der Gaszuführeinheit gefördertem Gas deutlich verstärkt werden. Die Patentschrift DE 4317867 A1 offenbart eine Abgasmessanlage die für die Messung verdünnter Abgase vorgesehen ist.

Es stellt sich daher die Aufgabe, eine Gaszuführeinheit zur Messung von Abgasen von Verbrennungskraftmaschinen zur Verfügung zu stellen, welche geringe Durchflussraten aufweisen und dennoch den Messgeräten das Messgas möglichst kurzfristig so zur Verfügung stellen, dass diese genaue Messwerte erreichen, wobei eine Rückwirkung auf den Verbrennungsmotor minimiert werden muss.

Diese Aufgabe wird durch eine Gaszuführeinheit für eine Abgasanalyseeinheit zur Messung von Abgasen von Verbrennungskraftmaschinen mit den Merkmalen des Hauptanspruchs 1 gelöst.

Dadurch, dass die Probengasleitung zwischen dem jeweiligen Messgerät und der Kalibriergasleitung sowie der Spülgasleitung in die Verbindungsleitung mündet, wobei am zum Messgerät entgegengesetzten Ende der Verbindungsleitung eine Abströmdüse angeordnet ist und von der Verbindungsleitung eine Abströmleitung abzweigt, in der eine Abströmdüse und ein Absperrventil angeordnet sind, wird erreicht, dass beim Starten der Messungen nur sehr kleine Volumina, welche mit Spülgas, Kalibriergas oder Probengas vorhergehender Messungen gefüllt sind, verdrängt werden müssen bis der zu messende Probengasstrom das Messgerät erreicht. Auch werden Verfälschungen der Messungen deutlich reduziert, da kein Probengasstrom an den Verbindungsleitungen des Spülgases oder des Kalibriergases vorbeiströmen muss. Dies führt zu sehr schnellen und korrekten Messergebnissen und ermöglicht durch die geringen vorhandenen Totvolumina eine Reduzierung der Durchflussrate. Des Weiteren wird durch die am zum Messgerät entgegengesetzten Ende der Verbindungsleitung angeordnete Abströmdüse verhindert, dass der Probengasstrom in die Verbindungsleitung in Richtung der Spülgas- und Kalibriergasanschlüsse gedrückt wird und von dort zurück in Richtung des Messgerätes strömt, wodurch die Messergebnisse negativ beeinflusst würden. Stattdessen strömt das Probengas, welches in den mit Spül- oder Kalibriergasen gefüllten Abschnitt gelangt, über die Düse nach außen und entfernt so die Kalibrier- und Spülgase aus diesen Leitungsabschnitten. Durch die Abströmdüse und das Absperrventil in der Abströmleitung wird gleichzeitig ein schnelles Entleeren der Verbindungsleitung von zuvor in der Leitung vorhandenem Gas erreicht, welches über die Düse bei geöffnetem Ventil beim Umschalten zwischen den verschiedenen Gasströmen abströmen kann, so dass lediglich das im Messgerät noch befindliche jeweilige Restgas aus dem Gesamtsystem gefördert werden muss. Zusätzlich kann eine Spülung mit einem größeren Gasstrom stattfinden als dem Gasstrom, für den das Messgerät ausgelegt ist.

Vorzugsweise zweigt die Abströmleitung zwischen der Mündung der Probengasleitung und dem Messgerät von der Verbindungleitung ab. Entsprechend wird in der Verbindungsleitung vorhandenes Spül- oder Kalibriergas durch das Probengas aus der Leitung verdrängt, ohne dass das Messgerät durchströmt werden muss. Wenn eine größere Menge des Probengases gefördert wird als durch einen Durchflussbegrenzer zum Messgerät strömen kann, wird so in kürzester Zeit sowohl die Leitung als auch das Messgerät selbst von Restgasen befreit, so dass sehr schnell zuverlässige Messergebnisse vorliegen.

Des Weiteren ist es vorteilhaft, wenn das Absperrventil in der Abströmleitung geöffnet ist, wenn eines der Absperrventile der Kalibriergasleitungen geöffnet ist und geschlossen ist, wenn das Absperrventil der Probengasleitung geöffnet ist. So ist das Messgerät nach dem Spülen sehr schnell einsatzbereit.

In einer vorteilhaften Ausführungsform mündet die Spülgasleitung zwischen jeder Kalibriergasleitung und der Mündung der Probengasleitung in die Verbindungsleitung. Dies führt dazu, dass bei der Einleitung des Spülgases keine Gasreste aus der Kalibriergasleitung mitgerissen werden können. Stattdessen wird das Kalibriergas durch den Spülgasstrom vollständig aus der Verbindungsleitung entfernt.

Es ist auch vorteilhaft, dass die Gaszuführeinheit mehrere Kalibriergasleitungen aufweist, in die Kalibriergase unterschiedlicher Konzentrationen des zu messenden Gasbestandteils einleitbar sind, wobei die Kalibriergasleitungen mit steigender Konzentration des zu messenden Gasbestandteils mit einem wachsenden Abstand zum Messgerät in die Verbindungsleitung münden. Auch dies dient dazu, dass am Messgerät nach einmaliger Entleerung der Verbindungsleitung vom zuvor verwendeten Kalibriergas keine Verunreinigungen durch höher konzentriertes Kalibriergas auftreten können, da das geringer dosierte Kalibriergas nicht an der Leitung des höher dosierten Kalibriergases vorbeigeführt wird. Stattdessen kann dieses höher dosierte Kalibriergas am entgegengesetzten Ende der Verbindungsleitung über die Abströmdüse vollständig abgeführt werden.

Vorzugsweise ist in der Verbindungsleitung stromabwärts der Kalibriergasleitung und der Spülgasleitung ein Druckregelventil angeordnet. Entsprechend kann mittels dieses Ventils sowohl der Druck der verschiedenen Kalibriergase als auch des Spülgases in der Verbindungsleitung geregelt werden.

In einer vorteilhaften Ausführung ist in der Verbindungsleitung ein Absperrventil angeordnet. Entsprechend können unerwünschte Durchströmungen der Verbindungsleitung unterbrochen werden. Dabei ist beispielsweise das Absperrventil bei Analyse des Probengases geschlossen und bei der Kalibrierung und Spülung geöffnet. Entsprechend schnell erfolgt eine Entleerung der Leitung vom Probengas, so dass in kurzer Zeit die Spülung und Kalibrierung durchgeführt werden kann. Aufgrund der geringen Probengasströme in der Abgasanalyseeinheit wird ein zusätzliches Abströmen des Probengases vor dem Messgerät verhindert und somit eine ausreichende Versorgung des Messgerätes mit Probengas für die Analyse sichergestellt.

In einer hierzu weiterführenden Ausführungsform ist das Absperrventil stromabwärts des Druckregelventils und stromaufwärts der Mündung der Probengasleitung in der Verbindungsleitung angeordnet. So kann während der Messungen des Probengases die Verbindungsleitung in Richtung der anderen Leitungen geschlossen werden, so dass vom Probengas keine zusätzlichen Volumina durchströmt werden. Entsprechend liegen in kürzester Zeit genaue Messergebnisse auch bei kleinen Abgasmengen vor.

In einer weiteren vorteilhaften Ausbildung der Erfindung weist die Abgasanalyseeinheit mehrere Messgeräte auf, die jeweils über eine Probengasleitung und eine Verbindungsleitung mit einer Hauptprobengasleitung fluidisch verbunden sind, wobei ein Druck in den Probengasleitungen über einen Rückdruckregler am Ende der Hauptprobengasleitung regelbar ist. Somit kann der Probengasdruck bei den Messungen in der Analyseeinheit für mehrere Messgeräte über lediglich einen Druckregler geregelt werden, wodurch Bauteile eingespart werden.

Des Weiteren ist die Pumpe zur Förderung des Probengasstroms vorzugsweise stromaufwärts der Messgeräte angeordnet. Dies verhindert eine Kontamination des Probengasstroms durch kleine Leckagen in der Abgasanalyseeinheit, da kein Gas angesaugt wird, sondern durch die Anlage gedrückt wird. Hierdurch entsteht ein Überdruck in der Anlage, der ein solches Einströmen von außen zuverlässig verhindert und das Abströmen der Gasströme über die Düsen ermöglicht.

Vorteilhafterweise fördert diese Pumpe einen Probengasstrom von 2,5 bis 3,0 l/min, so dass eine relativ klein bauende Membranpumpe verwendet werden kann. Bei einer derartig geringen Gasentnahme kann beispielsweise auch Abgas aus dem Abgasrückführkanal analysiert werden, ohne dass Rückwirkungen auf den Betriebszustand des zu testenden Motors zu befürchten sind.

Um eine derartig geringe Durchflussrate zu verwirklichen und dennoch eine ausreichende Geschwindigkeit in den Leitungen sicherzustellen, beträgt der Innendurchmesser der Verbindungsleitung und der Probengasleitung etwa 2 bis 4 mm.

Es wird somit eine Gaszuführeinheit für eine Abgasanalyseeinheit zur Messung von Abgasen von Verbrennungskraftmaschinen geschaffen, mit welcher auch bei sehr geringen Durchflussraten genaue Messwerte in sehr kurzer Ansprechzeit erreicht werden, indem Verfälschungen der Messwerte durch Verunreinigungen von außen oder durch Spül- oder Kalibriergase verhindert werden. Zusätzlich wird eine Rückwirkung durch die Probenahme auf den Verbrennungsmotor ausgeschlossen.

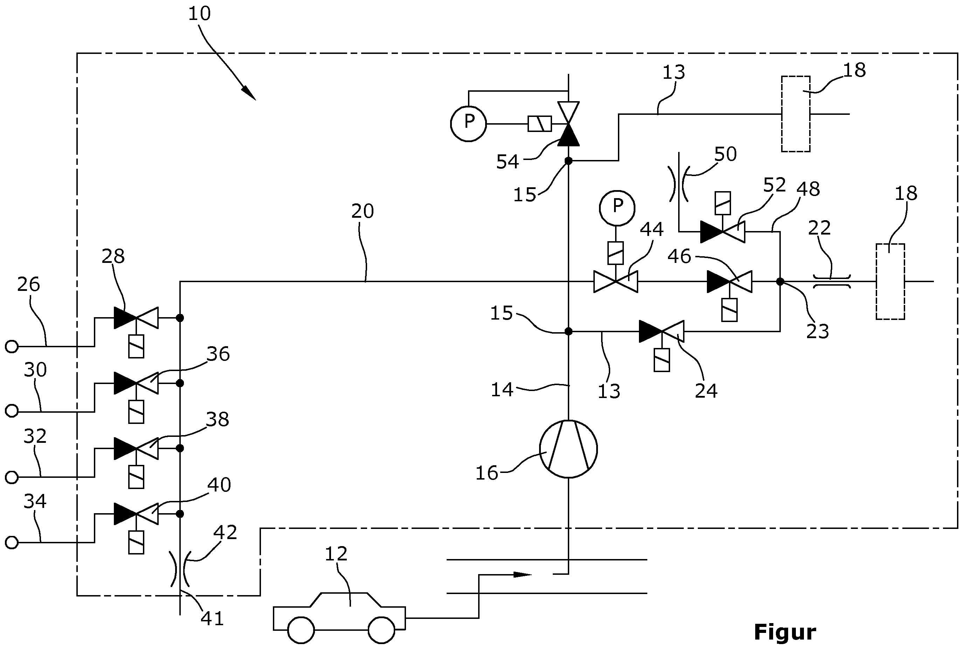

Ein Ausführungsbeispiel einer erfindungsgemäßen Gaszuführeinheit für eine Abgasanalyseeinheit zur Messung von Abgasen von Verbrennungskraftmaschinen ist in der Figur dargestellt und wird nachfolgend beschrieben.

Die Figur zeigt ein schematisches Fließschema einer erfindungsgemäßen Gaszuführeinheit einer Abgasanalyseeinheit.

Abgasanalyseeinheiten 10 werden mit einem Abgas aus einer Abgasquelle 12, wie beispielswiese einem Kraftfahrzeugverbrennungsmotor versorgt. Je nach verwendeter Anlage wird dieses Abgas der Analyseeinheit 10 entweder verdünnt oder unverdünnt zugeführt. Hierzu wird das Probengas entweder direkt aus einer Entnahmeleitung oder aus Probengasbeuteln in eine Hauptprobengasleitung 14 mittels einer Pumpe 16 gefördert, die im vorliegenden Ausführungsbeispiel das Probengas in die Hauptprobengasleitung 14 drückt, so dass eine Verunreinigung des Probengases aufgrund von Leckagen in der Hauptprobengasleitung 14 und den folgenden Probengasleitungen 13 ausgeschlossen werden kann.

Die Hauptprobengasleitung 14 weist verschiedene Abzweigungen 15 auf, von denen aus der Probengasstrom über die Probengasleitungen 13 zu verschiedenen Messgeräten 18 gefördert werden kann, die üblicherweise in einem Schaltschrank angeordnet sind. Diese Messgeräte sind beispielsweise ein Flammenionisationsdetektoranalysegerät zur Bestimmung von Kohlenwasserstoffen, ein Chemilumineszenzdetektoranalysegerät zur Bestimmung von Stickoxidmengen im Abgas oder ein Infrarotdetektoranalysegerät zur Bestimmung verschiedener aktiver Komponenten wie Kohlenmonoxid, Kohlendioxid oder Kohlenwasserstoffverbindungen und werden jeweils über eine eigene Verbindungsleitung 20 entweder mit dem Probengas oder mit Spülgas oder einem oder mehreren Kalibriergasen versorgt. Um dem Messgerät 18 jeweils eine korrekte Menge an Messgas zuzuführen, ist vor dem Messgerät 18 eine Drossel oder Kapillare 22 ausgebildet, durch die der Gasstrom begrenzt wird.

Im hinter der Abzweigung 15 liegenden Abschnitt der Probengasleitung 13 ist ein Absperrventil 24 angeordnet, über welches die Probengasleitung 13 vor ihrer Mündung 23 in die Verbindungsleitung 20 absperrbar ist.

Stromaufwärts der Mündung 23 der Probengasleitung 13 mündet eine Spülgasleitung 26 in die Verbindungsleitung 20, über welche Spülgas, beispielsweise Stickstoff, in Richtung des Messgerätes 18 gefördert werden kann. Auch in dieser Spülgasleitung 26 befindet sich ein Absperrventil 28 zum Öffnen und Verschließen der Spülgasleitung 26. Stromaufwärts der Spülgasleitung 26 münden im vorliegenden Ausführungsbeispiel drei Kalibriergasleitungen 30, 32, 34 in die Verbindungsleitung 20, wobei der Abstand der Mündung der jeweiligen Kalibriergasleitung 30, 32, 34 in die Verbindungsleitung 20 zum Messgerät 18 mit steigender Konzentration des Kalibriergases wächst. Die Konzentration wächst dabei beispielsweise in 10er Potenzen mit wachsendem Abstand vom Messgerät 18. In allen Kalibriergasleitungen 30, 32, 34 befindet sich wiederum ein Absperrventil 36, 38, 40, über welches der jeweilige Kalibriergasstrom freigegeben oder unterbrochen werden kann.

Am zum Messgerät 18 entgegengesetzten Ende 41 der Verbindungsleitung 20 ist eine Abströmdüse 42 angeordnet, über die das jeweils in der Verbindungsleitung 20 befindliche Gas bei Förderung eines anderen Gases aus der Verbindungsleitung 20 herausgedrückt wird, wodurch es nicht in Richtung des Messgerätes 18 zurückströmt. So wird sichergestellt, dass beispielsweise nach der Förderung von Kalibriergas aus der Kalibriergasleitung 32 bei der Förderung von Kalibriergas aus der Kalibriergasleitung 30, kein Kalibriergas aus der Kalibriergasleitung 32 oder aus dem stromaufwärtigen Abschnitt der Verbindungsleitung 20 in Richtung des Messgerätes 18 gedrückt wird. Dies würde zu deutlich verlängerten Kalibrierzeiten führen, da eine vollständige Entfernung der Restgase aus den Leitungen 20, 26, 30, 32, 34 deutlich länger dauern würde.

Zur Druckregelung der Kalibriergase und des Spülgases ist in der Verbindungsleitung 20 vor der Mündung 23 der Probengasleitung 13 in die Verbindungsleitung 20 ein Druckregelventil 44 und ein Absperrventil 46 angeordnet, welches bei Analyse des Probengases geschlossen wird, so dass der Probengasstrom nicht in Richtung der Kalibriergasleitungen 30, 32, 34 strömen kann und diese somit nicht mit dem Probengas kontaminiert werden.

Eine derartige Kontamination wird auch dadurch verhindert, dass stromabwärts des Absperrventils 46 eine Abströmleitung 48 von der Verbindungsleitung 20 abzweigt, in der eine Abströmdüse 50 und ein zeitgesteuertes Absperrventil 52 angeordnet sind, über die bei Förderung des Spülgases oder der Kalibriergase das zuvor in der Verbindungsleitung 20 vorhandene Gas, insbesondere das Probengas aus der Verbindungsleitung 20 gedrückt werden kann. Das Absperrventil 52 ist während des Spülvorgangs oder des Kalibriervorgangs geöffnet, so dass größere Mengen des jeweiligen Gases in die Verbindungsleitung 20 gefördert werden können, welche dann in kürzester Zeit die dort noch befindlichen Restgasmengen austreiben können, die über die Abströmdüse 50 abgeführt werden können. Sobald auf den Abgasanalysebetrieb umgestellt wird, reicht durch Schalten des Absperrventils 46 in der Verbindungsleitung eine kleine Menge Probengas aus, um den verbleibenden Verbindungsleitungsabschnitt 20 und das Messgerät 18 von den dort vorhandenen Gasen zu befreien. Das Absperrventil 52 in der Abströmleitung 48 schaltet entsprechend nach Beendigung der Kalibrierung oder Spülung und schließt den Querschnitt der Abströmleitung 48, so dass eine geringe Probengasmenge ausreicht, um das Messgerät 18 mit ausreichend Probengas zu versorgen.

Der Druck des Probengases wird dabei über einen Rückdruckregler 54 geregelt, der am Ende der Hauptprobengasleitung 14 stromabwärts der zu den Messgeräten 18 führenden Abzweigungen 15 in der Hauptprobengasleitung 14 angeordnet ist.

Die Probengasleitungen weisen lediglich einen Durchmesser von etwa 2 bis 4 mm auf und werden mit einem Volumenstrom von lediglich etwa 2,5 bis 3l/min durchströmt. Dies wird durch die besondere Anordnung der Abströmdüsen 42, 50 und Absperrventile 24, 46, 52 erreicht, mittels derer trotz der geringen Volumenströme sehr kurzfristig eine Evakuierung der vorhandenen Volumina von den zuvor geförderten Gasen erfolgen kann. Diese geringen Volumenströme wiederum ermöglichen eine Abgasmessung auch in Bereichen, in denen sehr geringe Abgasmengen anfallen, wie im Bereich der Abgasrückführung, ohne dass Rückwirkungen auf den Verbrennungsvorgang des Motors zu befürchten sind. Durch die vollständige und zuverlässige Evakuierung durch Vermeidung durchströmbarer Toträume sind die Messergebnisse trotz der geringen Mengen hochgenau.

Es sollte deutlich sein, dass der Schutzbereich des vorliegenden Hauptanspruchs nicht auf das beschriebene Ausführungsbeispiel begrenzt ist. Die Erfindung ist für verschiedenste Abgasmessanlagen nutzbar. Auch können Druckregelungen anders vorgenommen werden oder mehr oder weniger Kalibriergase genutzt werden.

## Patentansprüche

1. Gaszuführeinheit für eine Abgasanalyseeinheit (10) zur Messung von Abgasen von Verbrennungskraftmaschinen mit
einem Messgerät (18) zur Analyse von Probengas,
einer Kalibriergasleitung (30; 32; 34), einer Spülgasleitung (26) und einer Probengasleitung (13), die in eine gemeinsame Verbindungsleitung (20) münden, über die eine fluidische Verbindung zum Messgerät (18) herstellbar ist,
Absperrventilen (24, 28, 36, 38, 40) in der Kalibriergasleitung (30; 32; 34), der Spülgasleitung (26) und der Probengasleitung (13), über welche der Probengasstrom, der Kalibriergasstrom und der Spülgasstrom wahlweise absperrbar oder freigebbar sind,
einer Pumpe (16) zur Förderung des Probengasstroms aus einer Abgasquelle (12),
wobei die Probengasleitung (13) zwischen dem jeweiligen Messgerät (18) und der Kalibriergasleitung (30; 32; 34) sowie der Spülgasleitung (26) in die Verbindungsleitung (20) mündet, wobei am zum Messgerät (18) entgegengesetzten Ende der Verbindungsleitung (20) eine Abströmdüse (42) angeordnet ist und von der Verbindungsleitung (20) eine Abströmleitung (48) abzweigt, in der eine Abströmdüse (50) und ein Absperrventil (52) angeordnet sind.

2. Gaszuführeinheit für eine Abgasanalyseeinheit zur Messung von Abgasen von Verbrennungskraftmaschinen nach Anspruch 1,
**dadurch gekennzeichnet, dass**
die Abströmleitung (48) zwischen der Mündung (23) der Probengasleitung (13) und dem Messgerät (18) von der Verbindungleitung (20) abzweigt.

3. Gaszuführeinheit für eine Abgasanalyseeinheit zur Messung von Abgasen von Verbrennungskraftmaschinen nach Anspruch 1 oder 2,
**dadurch gekennzeichnet, dass**
das Absperrventil (52) in der Abströmleitung (48) geöffnet ist, wenn eines der Absperrventile (36, 38, 40) der Kalibriergasleitungen (30, 32, 34) geöffnet ist und geschlossen ist, wenn das Absperrventil (24) der Probengasleitung (13) geöffnet ist.

4. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
die Spülgasleitung (26) zwischen jeder Kalibriergasleitung (30; 32; 34) und der Mündung (23) der Probengasleitung (13) in die Verbindungsleitung (20) mündet.

5. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
die Gaszuführeinheit mehrere Kalibriergasleitungen (30, 32, 34) aufweist, in die Kalibriergase unterschiedlicher Konzentrationen des zu messenden Gasbestandteils einleitbar sind, wobei die Kalibriergasleitungen (30, 32, 34) mit steigender Konzentration des zu messenden Gasbestandteils mit einem wachsenden Abstand zum Messgerät (18) in die Verbindungsleitung (20) münden.

6. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
in der Verbindungsleitung (20) stromabwärts der Kalibriergasleitung (30; 32; 34) und der Spülgasleitung (26) ein Druckregelventil (44) angeordnet ist.

7. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
in der Verbindungsleitung (20) ein Absperrventil (46) angeordnet ist.

8. Gaszuführeinheit für eine Abgasanalyseeinheit zur Messung von Abgasen von Verbrennungskraftmaschinen nach Anspruch 7,
**dadurch gekennzeichnet, dass**
das Absperrventil (46) stromabwärts des Druckregelventils (44) und stromaufwärts der Mündung (23) der Probengasleitung (13) in der Verbindungsleitung (20) angeordnet ist.

9. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
die Abgasanalyseeinheit (10) mehrere Messgeräte (18) aufweist, die jeweils über eine Probengasleitung (13) und eine Verbindungsleitung (20) mit einer Hauptprobengasleitung (14) fluidisch verbunden sind, wobei ein Druck in den Probengasleitungen (13) über einen Rückdruckregler (54) am Ende der Hauptprobengasleitung (14) regelbar ist.

10. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
die Pumpe (16) zur Förderung des Probengasstroms stromaufwärts des Messgeräts (18) angeordnet ist.

11. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
die Pumpe (16) einen Probengasstrom von 2,5 bis 3,0 l/min fördert.

12. Gaszuführeinheit für eine Abgasanalyseeinheit zur Messung von Abgasen von Verbrennungskraftmaschinen nach einem der vorhergehenden Ansprüche,
**dadurch gekennzeichnet, dass**
der Innendurchmesser der Probengasleitung (13) sowie der Verbindungsleitung (20) etwa 2 - 4 mm beträgt.

## Claims

1. Gas supply unit for an exhaust gas analysis unit (10) for the measurement of exhaust gases of internal combustion engines comprising
a measuring device (18) for analyzing sample gas,
a calibration gas line (30; 32; 34), a purge gas line (26) and a sample gas line (13), which open into a common connecting line (20) via which a fluid communication with the measuring device (18) can be established,
stop valves (24, 28, 36, 38, 40) in the calibration gas line (30; 32; 34), the purge gas line (26) and the sample gas line (13), via which the sample gas flow, the calibration gas flow and the purge gas flow can be blocked or released,
a pump (16) for conveying the sample gas flow from an exhaust gas source (12),
wherein the sample gas line (13) between the respective measuring device (18) and the calibration gas line (30; 32; 34) as well as the purge gas line (26) opens into the connecting line (20), wherein a discharge nozzle (42) is arranged at the end of the connecting line (20) opposite the measuring device and a discharge line (48) branches off from the connecting line (20), in which a discharge nozzle (50) and a stop valve (52) are arranged.

2. Gas supply unit for an exhaust gas analysis unit for the measurement of exhaust gases of internal combustion engines of claim 1, **characterized in that** the discharge line (48) branches off from the connecting line (20) between the mouth (23) of the sample gas line (13) and the measuring device (18).

3. Gas supply unit for an exhaust gas analysis unit for the measurement of exhaust gases of internal combustion engines of claim 1 or 2, **characterized in that** the stop valve (52) in the discharge line (48) is open when one of the stop valves (36, 38, 40) of the calibration gas lines (30, 32, 34) is open, and is closed when the stop valve (24) of the sample gas line (13) is open.

4. Gas supply unit for an exhaust gas analysis unit for the measurement of exhaust gases of internal combustion engines of one of the preceding claims, **characterized in that** the purge gas line (26) opens into the connecting line (20) between each calibration gas line (30; 32; 34) and the mouth (23) of the sample gas line (13).

5. Gas supply unit for an exhaust gas analysis unit for the measurement of exhaust gases of internal combustion engines of one of the preceding claims, **characterized in that** the gas supply unit comprises a plurality of calibration gas lines (30, 32, 34) into which calibration gases with different concentrations of the gas component to be measured can be introduced, wherein the calibration gas lines (30, 32, 34) carrying increasing concentrations of the gas component to be measured open into the connecting line (20) at an increasing distance from the measuring device (18).

6. Gas supply unit for an exhaust gas analysis unit for the measurement of exhaust gases of internal combustion engines of one of the preceding claims, **characterized in that** a pressure control valve (44) is arranged in the connecting line (20) downstream of the calibration gas line (30; 32; 34) and the purge gas line (26).

7. Gas supply unit for an exhaust gas analysis unit for the measurement of exhaust gases of internal combustion engines of one of the preceding claims, **characterized in that** a stop valve (46) is arranged in the connecting line (20).

8. Gas supply unit for an exhaust gas analysis unit for the measurement of exhaust gases of internal combustion engines of claim 7, **characterized in that** the stop valve (46) is arranged in the connecting line (20) downstream of the pressure control valve (44) and upstream of the mouth (23) of the sample gas line (13).

9. Gas supply unit for an exhaust gas analysis unit for the measurement of exhaust gases of internal combustion engines of one of the preceding claims, **characterized in that** the exhaust gas analysis unit (10) comprises a plurality of measuring devices (18), each of which is in fluid communication with a main sample gas line (14) via a sample gas line (13) and a connecting line (20), wherein a pressure in the sample gas lines (13) can be controlled via a back pressure regulator (54) at the end of the main sample gas line (14).

10. Gas supply unit for an exhaust gas analysis unit for the measurement of exhaust gases of internal combustion engines of one of the preceding claims, **characterized in that** the pump (16) for conveying the sample gas flow is arranged upstream of the measuring device (18).

11. Gas supply unit for an exhaust gas analysis unit for the measurement of exhaust gases of internal combustion engines of one of the preceding claims, **characterized in that** the pump (16) delivers a sample gas flow of 2.5 to 3.0 I/min.

12. Gas supply unit for an exhaust gas analysis unit for the measurement of exhaust gases of internal combustion engines of one of the preceding claims, **characterized in that** the inner diameter of the sample gas line (13) as well as of the connecting line (20) is approximately 2-4 mm.

## Revendications

1. Unité d'alimentation en gaz pour une unité d'analyse des gaz d'échappement (10) pour le mesurage des gaz d'échappement des moteurs à combustion interne, comprenant
un appareil de mesure (18) pour analyser les gaz d'échantillonnage,
une conduite de gaz d'étalonnage (30; 32; 34), une conduite de gaz de purge (26) et une conduite de gaz d'échantillonnage (13), qui s'ouvrent dans une conduite de connexion commune (20), par laquelle une communication fluidique avec le dispositif de mesure (18) peut être établie,
des soupapes d'arrêt (24, 28, 36, 38, 40) dans la conduite de gaz d'étalonnage (30; 32; 34), la conduite de gaz de purge (26) et la conduite de gaz d'échantillonnage (13), par lesquelles le débit de gaz d'échantillonnage, le débit de gaz d'étalonnage et le débit de gaz de purge peuvent être fermés ou libérés,
une pompe (16) pour transporter le débit de gaz d'échantillon à partir d'une source de gaz d'échappement (12),
dans laquelle la conduite de gaz d'échantillonnage (13) s'ouvre dans la conduite de connexion (20) entre le dispositif de mesure respectif (18) et la conduite de gaz d'étalonnage (30; 32; 34) et la conduite de gaz de purge (26), une buse d'éjection (42) étant disposée à l'extrémité de la conduite de connexion (20) opposée au dispositif de mesure (18), et une conduite d'éjection (48) branche de la conduite de connexion (20) dans laquelle une buse d'éjection (50) et une soupape d'arrêt (52) sont disposées.

2. Unité d'alimentation en gaz pour une unité d'analyse de gaz d'échappement pour le mesurage des gaz d'échappement de moteurs à combustion interne selon la revendication 1, **caractérisée en ce que** la conduite d'éjection (48) branche de la conduite de connexion (20) entre l'embouchure (23) de la conduite de gaz d'échantillonnage (13) et le dispositif de mesure (18).

3. Unité d'alimentation en gaz pour une unité d'analyse de gaz d'échappement pour le mesurage des gaz d'échappement de moteurs à combustion interne selon la revendication 1 ou 2, **caractérisée en ce que** la soupape d'arrêt (52) dans la conduite de sortie (48) est ouverte lorsque l'une des soupapes d'arrêt (36, 38, 40) des conduites de gaz d'étalonnage (30, 32, 34) est ouverte, et est fermée lorsque la soupape d'arrêt (24) de la conduite de gaz échantillon (13) est ouverte.

4. Unité d'alimentation en gaz pour une unité d'analyse de gaz d'échappement pour le mesurage les gaz d'échappement de moteurs à combustion interne selon l'une quelconque des revendications précédentes, **caractérisée en ce que** la conduite de gaz de purge (26) s'ouvre dans la conduite de connexion (20) entre chaque conduite de gaz d'étalonnage (30; 32; 34) et l'embouchure (23) de la conduite de gaz échantillonnage (13).

5. Unité d'alimentation en gaz pour une unité d'analyse de gaz d'échappement pour le mesurage les gaz d'échappement de moteurs à combustion interne selon l'une quelconque des revendications précédentes, **caractérisée en ce que** l'unité d'alimentation en gaz comprend plusieurs conduites de gaz d'étalonnage (30, 32, 34) dans lesquelles peuvent être introduits des gaz d'étalonnage à différentes concentrations du composant gazeux à mesurer, les conduites de gaz d'étalonnage (30, 32, 34) avec une concentration croissante du composant gazeux à mesurer s'ouvrent dans la conduite de connexion (20) à une distance croissante du dispositif de mesure (18).

6. Unité d'alimentation en gaz pour une unité d'analyse de gaz d'échappement pour le mesurage les gaz d'échappement de moteurs à combustion interne selon l'une quelconque des revendications précédentes, **caractérisée en ce qu'**une soupape de commande de pression (44) est disposée dans la conduite de connexion (20) en aval de la conduite de gaz d'étalonnage (30; 32; 34) et de la conduite de gaz de purge (26).

7. Unité d'alimentation en gaz pour une unité d'analyse de gaz d'échappement pour le mesurage des gaz d'échappement de moteurs à combustion interne selon l'une quelconque des revendications précédentes, **caractérisée en ce qu'**une soupape d'arrêt (46) est disposée dans la conduite de connexion (20).

8. Unité d'alimentation en gaz pour une unité d'analyse des gaz d'échappement pour le mesurage les gaz d'échappement des moteurs à combustion interne selon la revendication 7, **caractérisée en ce que** la soupape d'arrêt (46) est disposée dans la conduite de connexion (20) en aval de la soupape de commande de pression (44) et en amont de l'embouchure (23) de la conduite de gaz d'échantillonnage (13).

9. Unité d'alimentation en gaz pour une unité d'analyse des gaz d'échappement pour le mesurage les gaz d'échappement des moteurs à combustion interne selon l'une quelconque des revendications précédentes, **caractérisée en ce que** l'unité d'analyse des gaz d'échappement (10) comprend plusieurs dispositifs de mesure (18), chacun étant en communication fluidique avec une conduite principale de gaz d'échantillonnage (14) par une conduite de gaz d'échantillonnage (13) et une conduite de connexion (20), dans lequel une pression dans les conduites de gaz d'échantillonnage (13) peut être réglée via un régulateur de contre-pression (54) à l'extrémité de la conduite principale de gaz d'échantillonnage (14).

10. Unité d'alimentation en gaz pour une unité d'analyse de gaz d'échappement pour le mesurage des gaz d'échappement de moteurs à combustion interne selon l'une quelconque des revendications précédentes, **caractérisée en ce que** la pompe (16) pour faire s'écouler le flux de gaz échantillon est disposée en amont du dispositif de mesure (18).

11. Unité d'alimentation en gaz pour une unité d'analyse de gaz d'échappement pour le mesurage des gaz d'échappement de moteurs à combustion interne selon l'une quelconque des revendications précédentes, **caractérisée en ce que** la pompe (16) transporte un débit de gaz échantillon de 2,5 à 3,0 I/min.

12. Unité d'alimentation en gaz pour une unité d'analyse de gaz d'échappement pour le mesurage les gaz d'échappement de moteurs à combustion interne selon l'une quelconque des revendications précédentes, **caractérisée en ce que** le diamètre intérieur de la conduite de gaz d'échantillonnage (13) et de la conduite de connexion (20) est d'environ 2 à 4 mm.
